# EUROPEAN PATENT APPLICATION

(11) **EP 2 200 416 A2**
(43) Date of publication of application: **23.06.2010**
(21) Application number: 09380166.0
(22) Date of filing: 19.10.2009
(51) Int. Cl.: H05K 7/00

(54) **Device for fixing electrical mechanisms onto a frame chassis**

(30) Priority: 18.12.2008 ES 200802580 U
(71) Applicant: Simon, S.A., 08013 Barcelona (ES)
(72) Inventor: Moret Codina, Maria Christina, 08021 Barcelona (ES)
(74) Representative: Espiell Volart, Eduardo Maria

(57) **Abstract**

The base body -1- has two vertical guide flanges -8- symmetrically arranged on its two front faces, positioned opposite respective grooves -7- disposed on the vertical faces -6- of the frame chassis -2-, the flanges -8- of which slide into said grooves -7- during movement of the base body -1- to become finally positioned inside the frame chassis -2-, thereby eliminating the swinging or sideways movement thereof.

The grooves -7- have a special contour, delimiting an upper zone -7a- that is slightly open and incides upon the edge of the frame chassis -2-, a wide central zone -7band a straight lower zone -7c-.

A tongue -3- is disposed opposite the central groove -7- and a clip -5- incides upon the edge of the frame chassis -2-, pressure being exerted on said clip -5- and consequently on the tongue -3- which moves, due to its flexibility, towards the interior of the base body -1-, returning to its initial position when the body -1-reaches its final position and the clip -5- is introduced into the wide zone -7b- of the groove -7-, becoming fastened together by clipping.

The base body -9- of smaller width has a single vertical guide flange -10-.

## Description

The present invention relates to a device for fixing electrical mechanisms, of the type consisting of and incorporated inside a base body, onto the frame chassis that will serve to position and permanently install said mechanism in the respective boxes or enclosures, fitted or not, the essential characteristics of which are described below.

Fixing of said electrical mechanisms for diverse applications, externally defined in a base body onto the frame chassis that must maintain it positioned in a permanent manner, has to date required the use of adequate elements, such as screws, staples or other similar elements, which has represented an increase in cost due to the manufacture thereof and the work of the operators, on having to use them, with the ensuing increase in installation time.

The fixing device that is the object of the present invention offers a practical and effective solution to the drawbacks arising from the current state of the art, on incorporating vertical guide flanges into the front faces of the base body, which are adequately positioned opposite grooves arranged on the vertical walls of a frame chassis, thereby avoiding the problems that could arise from the possible swinging or sideways movement of the base body with respect to the frame chassis.

Therefore, guaranteeing this removability of the base body with respect to the frame chassis on which it is installed is an essential characteristic of the device. This frame chassis must be capable of allowing the installation of one or several base bodies therein, according to the needs of the installation, only varying the size thereof.

The front faces of the base body are also equipped with the known flexible tongue system, susceptible to moving towards the interior of the body itself when pressed and immediately recovering their initial position, complemented with the special contour grooves of the frame chassis, arranged on the vertical walls of the inner opening thereof, in such a manner that, on introducing, by simple sliding, the base body inside the frame chassis, the clip of each flexible tongue of the base body is fastened inside the corresponding groove, guaranteeing, by the clipping effect, the permanent fixing and stability of the position of the body with respect to its frame chassis.

The flexibility of these tongues allows the clip, by means of a simple external action, to be released from the position where it has become fastened inside the corresponding groove, for the purpose of allowing the extraction of the base body from its frame chassis.

In the description provided hereunder, wherein reference is made to the accompanying drawings and wherein a practical embodiment of the invention has been represented, by way of example, variants of the device are indicated, defined by the sizing of the mechanism body, fixed on a frame chassis. In said drawings:
- Fig. 1: shows a perspective view of an assembly of the mechanism base body and frame chassis, separated in an exploded representation thereof;
- Fig. 2: shows a perspective and exploded view, identical to the preceding figure, but referenced to a mechanism body of smaller width;
- Figs. 3 to 5 bis: make reference to the fixing device corresponding to a mechanism body having a width according to figure 1; while figures 6 to 8 bis correspond to a mechanism body of smaller width, according to figure 2;

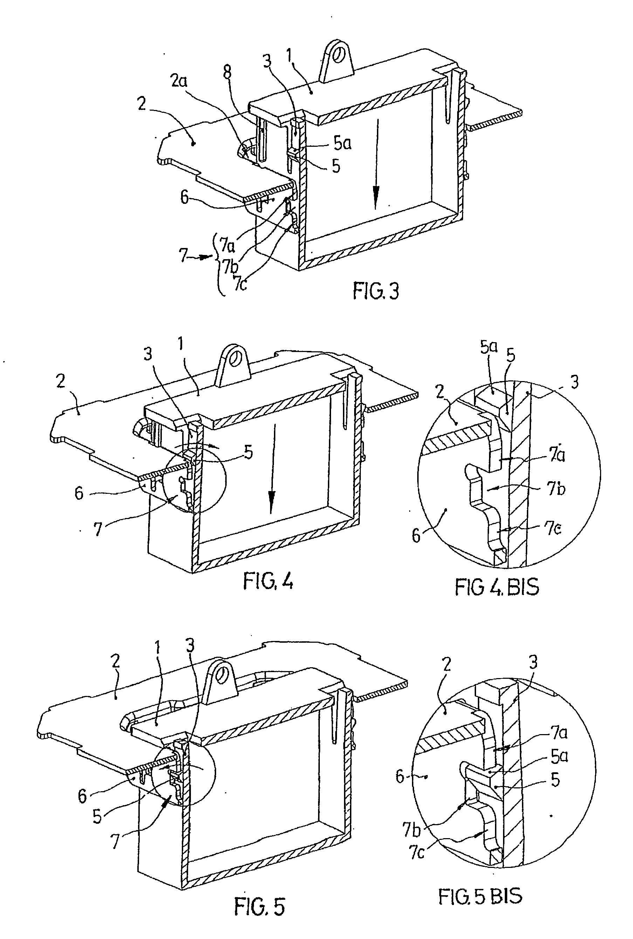

- Fig. 3: therefore shows a perspective and longitudinal cross-sectional view of the base body on being introduced inside the frame chassis;
- Fig. 4: shows a view corresponding to the preceding figure, with the base body introduced further into the frame chassis, to the point where the flexible flanges swing towards the interior of the base body upon coming into contact with the upper edge of the frame chassis;
- Fig. 4 bis: shows a detailed view, on a larger scale, of the position of the clip and the edge of the frame chassis, in addition to the entrance of the corresponding side groove;
- Fig. 5: shows a view corresponding to figures 3 and 4, but with the base body already arranged inside the frame chassis, in its final position;
- Fig. 5 bis: shows a detailed view, on a larger scale, of the final position of the clip, fastening the assembly together by the clipping effect;

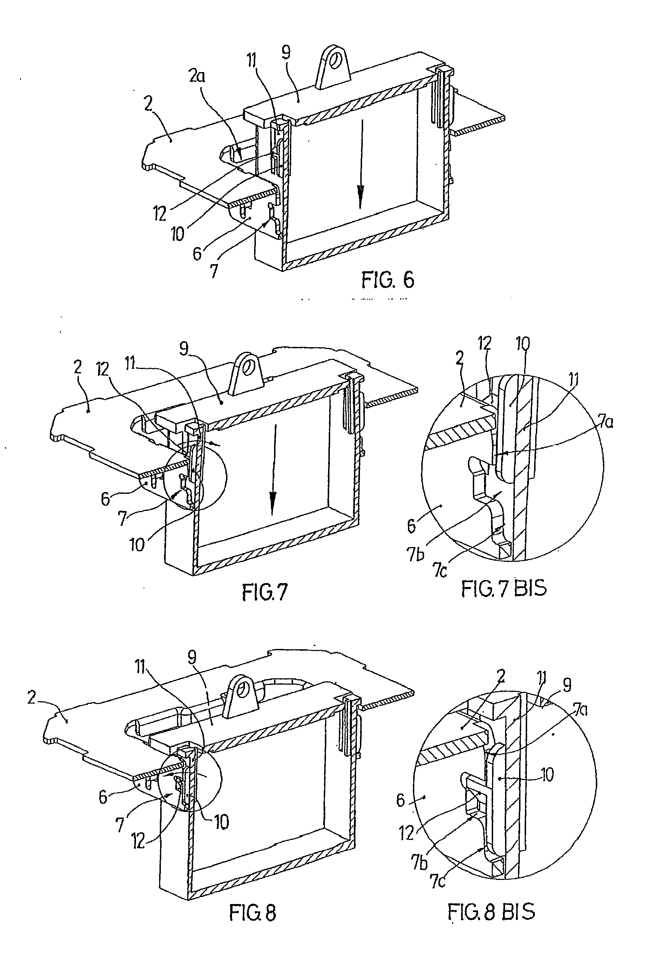

- Fig. 6: shows a perspective and longitudinal cross-sectional view of the base body of smaller width, on being introduced into the frame chassis;
- Fig. 7: represents the base body of smaller width partially introduced into the frame chassis, in a position similar to that of figure 4;
- Fig. 7 bis: shows a detailed view, on a larger scale, of the position of the clip and the edge of the frame chassis, according to the preceding figure;
- Fig. 8: represents this base body of smaller width, in a view corresponding to that of figures 6 and 7, arranged in its final position within the frame chassis; and
- Fig. 8 bis: finally shows a detailed view, on a larger scale, of the position of the clip, already fastened, according to figure 8.

In accordance with the drawings, the fixing device that is the object of the present invention is applied to electrical mechanisms of diverse functionality, integrated inside a base body -1-, which may be immediately fixed, without need for any fixing, coupling or clamping accessory, to the central opening -2a- of a frame chassis -2-.

An essential characteristic of the device that is the object of the present invention is the fact that the base body -1-, on being arranged inside the central opening -2a- of the frame chassis -2-, becomes fixed in such a manner that it cannot swing in a backward and forward direction nor move sideways in a horizontal direction, inside the aforementioned central opening -2a- of the frame chassis -2-.

The sliding of the base body -2- into said central opening -2a-, when the base body is arranged in its installation position, is guided and, therefore, centred thanks to the presence of two vertical guide flanges -8- symmetrically arranged on each of the front faces of the base body -1-.

These vertical guide flanges -8- are positioned opposite corresponding end grooves -7- of the side walls -6- of the frame chassis -2-, in such a manner that they are introduced therethrough when the base body -1- slides towards its final position, thereby being guided, specifically, along the upper zone -7a- and lower section -7c- of the corresponding groove -7-. In this manner, the possible problems that could arise from the swinging or movement of the base body -1- inside the frame chassis -2- and with respect thereto are avoided.

Additionally, and given its special characteristics, the previously described device also allows an easy and rapid extraction of the base body -1- for housing of the mechanism, when necessary, for maintenance or replacement of its functions.

To this end, the base body -1- has on the upper part of its two front side faces and between the two vertical guide flanges -8-, two flexible tongues -3-, elements of already known application, which are susceptible, on being pressed, to moving towards the interior of the base body -1-, movement allowed by the opening or entrance -4- on the upper face of the body -1-.

This tongue -3- has a clip -5-, having a trapezoidal cross-section, on its outer face, while its upper face -5a- is flat and slightly tilted outwards.

For its part, the frame chassis -2- has, as mentioned earlier, two side walls -6-, symmetrically and vertically arranged as of the longitudinal edges of its central opening -2a-. Grooves -7- have been arranged on each of these side walls -6- (three in the represented example), having a special contour, with a first upper zone -7a- slightly open and inciding upon the inner edge of the frame chassis -2-, followed by a wide opening -7b-, and a final straight lower section -7c-.

When the base body -1- is arranged inside the frame chassis -2-, the tongue - 3- is arranged opposite its corresponding groove -7-, in such a manner that, as the base body -1- is introduced into the frame chassis -2-, as can be observed in figures 4 and 4 bis, the clip -5- incides upon the edge of said frame chassis -2-.

In this position it causes, due to pressing of the clip -5-, the backward flexion of the tongue -3-, given the flexibility inherent to the material, while the base body -1- gradually descends. The tongue -3- returns to its initial position, as represented in figures 5 and 5 bis when, upon reaching the base body -1- its final position, the clip -5-is introduced into the wide zone -7b- of the groove -7-, said clip being subsequently fastened inside said wide zone -7b-, whereupon the base body -1- also becomes fixed in its final installation or assembly position inside the frame chassis -2-.

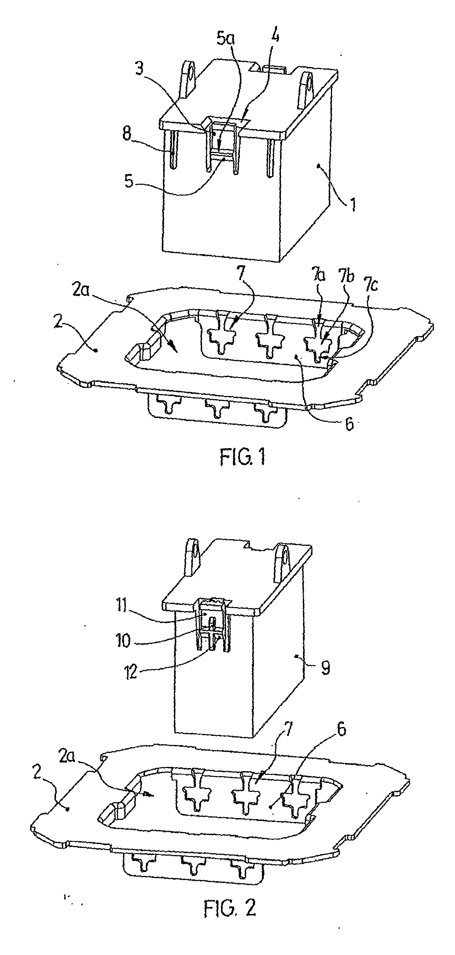

As a variant of practical embodiment, according to figures 2 and 6 to 8 bis, the device allows fixing of a base body -9- of smaller width than the previously described base body -1-, wherein the frame chassis -2- is identical to that previously described, while the base body -9- has variations in the flexible flanges.

Given its smaller width, this base body -9- has a single vertical guide flange - 10- for sliding thereof inside the central opening -2a- of the frame chassis -2- and avoiding the swinging or sideways movement of said base body -9-.

This vertical guide flange -10- is arranged on the flexible tongue -11- that the base body -9- has at the centre of its two front side faces, vertically crossing over the clip -12- that will be fastened, by means of clipping, inside the corresponding groove - 7- of the frame chassis -2-, when the base body -9- is arranged in its final assembly position, guaranteeing the removability of said base body -9-.

Thus arranged, during sliding of the base body -9- the vertical guide flange -10-is introduced into the same groove -7- wherein the clip -12- is fastened, guided by the upper -7a- and lower -7c- zones of said groove -7-.

In both embodiments the action of the installation operator, from outside of the device, exerting pressure towards the interior of the base body -1- or -9- on the upper end of the flexible tongues -3- or -11- causes release of the fastened clip -5- or -12-, due to which the corresponding base body may easily be extracted, sliding it towards the frame chassis -2-.

Having sufficiently described the device that is the object of the present invention, we must point out that any variation in size, shape and finish, in addition to the materials used in the practical manufacture thereof, shall not alter the essentiality of the invention, which is summarised in the following claims.

## Claims

1. Device for fixing electrical mechanisms onto the frame chassis, applied to electrical mechanisms of diverse function, integrated in a base body -1-, for the purpose of being immediately fixed onto the frame chassis -2- through its central opening -2a-, without need for any additional accessory, allowing its rapid extraction, for maintenance or replacement thereof, **characterised in that** this base body -1- has, on its two front side faces and symmetrically arranged, two vertical guide flanges -8- positioned opposite respective grooves -7- arranged on the vertical faces -6- of the frame chassis -2-, the flanges -8- of which slide inside said grooves -7- during movement of the base body -1- towards its final position inside the frame chassis -2-, thereby eliminating all possibility of swinging of said base body -1- or sideways movement thereof inside the frame chassis -2-.

2. Device for fixing electrical mechanisms onto the frame chassis, according to the preceding claim, the frame chassis -2- of which has two symmetrical vertical side walls -6- arranged as of the longitudinal edges of the central opening -2a-, **characterised in that** the grooves -7- arranged on each vertical side wall -6- have a special contour, delimiting an upper zone -7a- that is slightly open and incides upon the edge of the frame chassis -2-, a wide central zone -7b- and a straight lower section -7c-.

3. Device for fixing electrical mechanisms onto the frame chassis, according to claims 1 and 2, wherein the side faces of the base body -1- have two flexible tongues -3-, already known, movable by pressure towards the interior of the base body -1- and equipped with two fastening clips -5-, **characterised in that** the position of the grooves -7- of the frame chassis -2- and corresponding flexible tongue -3- causes, on introducing the base body -1- inside the frame chassis -2-, said tongue -3- to face the central groove -7-, wherein a tongue -5- incides upon the edge of the frame chassis -2-, exerting pressure on said clip -5- and, consequently, on the tongue -3- which moves it, due to its flexibility, towards the interior of the base body -1-, returning to its initial position when the body -1- reaches its final position and the clip -5- is introduced into the wide zone -7b- of the groove -7-, becoming fastened, by clipping, inside said zone, whereupon the base body -1- also becomes fixed in its final assembly position.

4. Device for fixing electrical mechanisms onto the frame chassis, according to claim 1, applicable to the fixing of base bodies of smaller width -9- to a frame chassis -2- having unvarying characteristics, **characterised in that** the base body - 9- of smaller width, has a single vertical guide flange -10- for guided sliding thereof over the frame chassis -2- arranged on the flexible tongue -11- itself and vertically crossing over the clip -12- which, by clipping, is fastened inside the corresponding groove -7- when the base body -9- is arranged in its final position, whereupon the vertical guide flange -10- carries out its function guided by the upper -7a- and lower - 7c- zones of the same groove -7- wherein the clip -12- is fastened.

5. Device for fixing electrical mechanisms onto the frame chassis, according to claims 1 to 4, **characterised in that** pressure exerted inwards from the exterior on the upper part of the flexible tongues -3- or -11- causes release of the clips -5- or - 12-, allowing the simple outward extraction of the base body -1- or -9- from the frame chassis -2-.
